# EUROPEAN PATENT APPLICATION

(11) **EP 0 563 750 A1**
(43) Date of publication of application: **06.10.1993**
(21) Application number: 93104736.9
(22) Date of filing: 23.03.1993
(51) Int. Cl.: B23K 35/02, B23K 35/36, B22F 1/00

(54) **Method for forming preformed elements of required shape and dimensions for welding metal components, in particular by brazewelding, and elements obtained thereby**

(30) Priority: 01.04.1992 IT MI920790
(71) Applicant: WHIRLPOOL EUROPE B.V., NL-5507 SK Veldhoven (NL)
(72) Inventor: Puorro, Angelo, Whirlpool Italia s.r.l., I-21025 Comerio (VA) (IT); Albe, Walter, Whirlpool Italia s.r.l., I-21025 Comerio (VA) (IT)
(74) Representative: Melio, Jan Dirk

(57) **Abstract**

A method for forming preformed elements (1) for welding metal components and parts (15, 16), particularly by braze-welding, comprises a succession of stages in which a known flux powder (10) is associated with a usual brazing alloy powder (11) and with granules of organic binder material (12), the result obtained being finely pulverized and pressed to form the required preformed element (1). The element obtained by the aforesaid method is in the form of a body comprising any known flux powder and a usual brazing alloy powder dispersed homogeneously within an organic binder material, said body having a well defined and stable shape.

## Description

This invention relates to a method for forming preformed elements of required shape and dimensions for welding metal components and parts, in particular by braze-welding. The invention also relates to the preformed element obtained by said method.

In flame, electrical resistance, high frequency or induction welding with automatic or robotic devices, the known problem exists of how to apply the weld material or brazing alloy and the flux in a single operation. In this respect the alloys usually used are based on copper with or without silver, plus tin and/or zinc and/or cadmium, whereas the fluxes are compounds based on sodium and/or potassium salts of boron and/or fluorine (such as potassium fluoroborate, sodium tetraborate and potassium fluoride).

In automatic welding with said devices, there is a requirement for elements which incorporate all these components (ie the alloy representing the actual weld material and the flux), and which can be arranged at the joining regions between the metal parts so that they melt during welding and secure the parts together.

It is known to use rings, washers or similar elements made of welding alloy. These rings enable the alloy to be arranged in the required position during the welding of the parts. The flux is applied only afterwards to the welding region (for example by a brush or a known dispenser device). However, this welding method presents problems, relating to the time for arranging said rings (or the like) and for applying the flux to the weld. It also requires machines for applying the flux or an operator for carrying out this operation. This implies an obvious increase in the welding time.

It is also known to use small bars in which the flux or flux-containing material is arranged on the surface of a central core of brazing alloy. These bars are however used for manual welding and have little or no application in welding by automatic devices because they are of unsuitable shape.

Other types are also known, but these suffer from the same drawbacks as the bars. For example, a further type uses grooved rods in which a welding alloy core comprises grooves holding the flux. The flux forms only a very small percentage of the total rod weight. In addition, if the parts to be joined together are not very clean and comprise impurities (dust, mould, oxides etc.) on the regions to be welded, the weld is not reliable or durable with time.

An object of the present invention is to provide a method for forming preformed elements for use in metal part welding which contain the entire welding material (welding alloy plus flux) and are of such a shape as to be simple to use by automatic and/or robotic devices for such welding.

A further object is to provide a method of the stated type which is simple to implement and enables said preformed elements to be produced at low cost.

A further object is to provide a method of the stated type which can be implemented by known devices common in the state of the art.

A further object of the invention is to provide a preformed element by said method, which can be used in welding by automatic or robotic devices.

A further object is to provide a preformed element which can assume any shape depending on the use for which it is intended or the shape of the parts to be welded together.

These and further objects which will be apparent to the expert of the art are attained by the method described in the accompanying claims.

In particular, according to the invention the brazing alloy powder and the flux powder have a particle size preferably between 100 and 400 mesh. The alloy is preferably chosen from those with a melting point exceeding 427°C.

The flux is preferaby chosen from fluxes containing mixtures of sodium and/or potassium salts of boron and/or fluorine.

The organic binder is preferably polyethylene with a melting point of 85-260°C or polypropylene with a melting point of 150-280°C, while the lubricant can be lithium or zinc stearate or be chosen from paraffins having a melting point of 42-60°C.

The aforesaid objects are also attained by a preformed element characterised by being in the form of a body homogeneously comprising flux powder and a usual brazing alloy powder, said body having a well defined and stable shape.

The present invention will be more apparent from the accompanying drawing, which is provided by way of non-limiting example and in which:
Figure 1 is a scheme relative to the implementation of the method according to the invention; and
Figure 2 is a schematic representation of a preformed element obtained by the method of Figure 1.

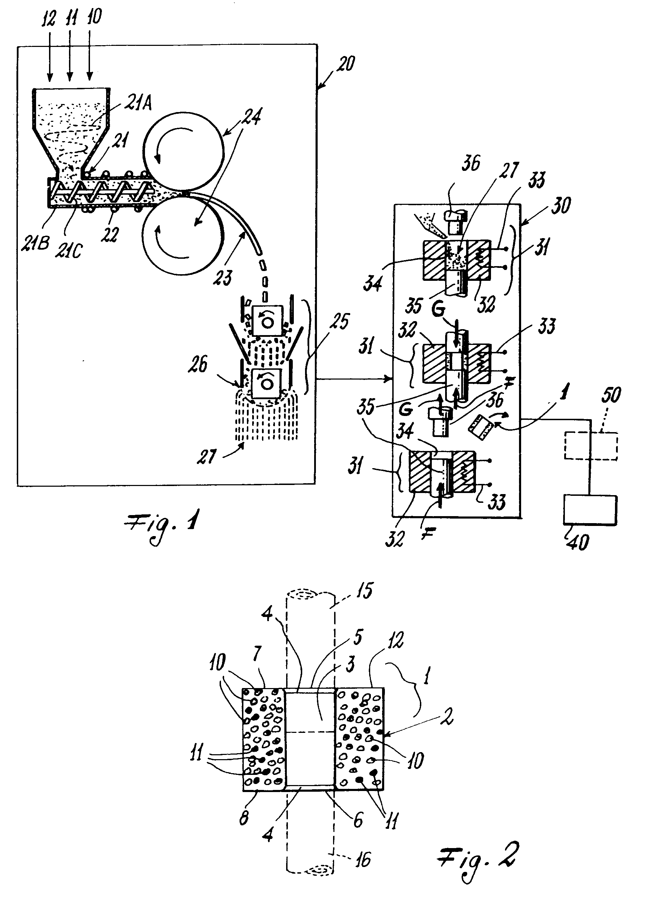

With particular reference to Figure 2, the preformed element is indicated by 1 and comprises a body 2 of substantially cylindrical shape with a through hole 3 which is flared at 4 at its ends 5 and 6, which open into opposing faces 7 and 8 of the body 2. This latter comprises flux powder 10 and braze-welding alloy 11, which are uniformly dispersed within an organic binder and/or lubricant 12. The body 2 thus represents a homogeneous structure with a well defined shape, which in this example is cylindrical (but can also be in the shape of a disc, a washer etc.), but which depends on the use for which the element 1 is intended (which in the case under examination is to weld together two tubes 15 and 16 inserted into the hole 3 until they touch each other).

Specifically, the braze-welding alloy used for forming the element 1 is a usual copper-based alloy containing or not containing silver, with a melting point exceeding 420°C. A copper alloy not containing silver is preferably used, and is preferably chosen from the following alloy group: copper-tin, copper-zinc and copper-phosphorus, for example the alloys defined by DIN 8513 under the following abbreviations: CuSn6,L-CuSn12,L-CuZn40,L-CuZn39Sn,L-SFCu,L-CuP. The preferred alloys are in powder form with a particle size of 100-400 mesh, and still more preferred are those with a melting point of 850-900°C (preferably 870-890°C such as CuZn39Sn), although for braze-welding matals other than steel, cast iron, copper alloys with a melting point exceeding 950°C, nickel, nickel alloys and iron, alloys with a lower melting point can be used, for example in the case of copper and copper alloys with a melting point lower than the aforesaid materials but exceeding 427°C.

The flux is a known material used for the purpose containing mixtures of sodium and/or potassium salts of boron and/or fluorine. This material is in powder form with a particle size of 100-400 mesh. By way of example, fluxes having the following weight compositions can be used:

| | | |
|---|---|---|
| Example 1 | 57% | KBF₄ |
| | 25% | Na₂B₄O₇ |
| | 9% | H₃BO₃ |
| | 9% | KHF₂ |
| Total | 100% | |

| | | |
|---|---|---|
| Example 2 | 13% | K₂B₄O₇.4H₂O |
| | 67% | KBF₄ |
| | 10% | H₃BO₃ |
| | 10% | K₂CO₃ |
| Total | 100% | |

| | | |
|---|---|---|
| Example 3 | 50% | KBF₄ |
| | 25% | K₂B₄O₇.4H₂O |
| | 10% | K₂CO₃ |
| | 10% | B₂O₃ |
| | 5% | KHF₂ |
| Total | 100% | |

The organic binder is a plastics material, preferably polyethylene or polypropylene, and the lubricant is preferably paraffin or stearic acid salts with lubricating properties such as alkaline stearates.

Preferably used are paraffin with a melting point of 42-60°C and polyethylene with a melting point of 85-260°C (or polypropylene as already stated).

Their weight percentage in the overall binding material depends on the alloy and flux used, and can vary between 30% and 40% for the paraffin and between 60% and 70% for the polyethylene.

With reference to Figure 1, the method of the invention is implemented in the following manner.

In a first stage 20 of the method the powdered brazing alloy 11, the powdered flux 10 and the organic binder plus lubricant 12 are fed into a hopper 21 fitted with a stirrer 21A. These components are fed premixed within the following preferred weight ratios:

| | |
|---|---|
| powdered brazing alloy (11) | 50-97% |
| powdered flux (10) | 3-40% |
| organic binder (plus lubricant) | 1-10% |

The components are mixed together in the hopper by the stirrer 21A and enter a cylinder 21B in which a screw 21C operates. Usual temperature-controlled heater elements 22 associated with the cylinder heat the mixture to a temperature close to 300°C, preferably 200-290°C. From the cylinder an agglomerate 23 emerges which although homogeneous has an excessive particle size, unsuitable for subsequent processing.

To reduce this particle size the agglomerate is pressed by rollers 24 and then ground by a conventional grinder 25 with superimposed rotary hammers and screened through a usual screen 26 at the grinder exit. The powder 27 obtained in this manner has a suitable particle size of 100-400 mesh.

This powder is now ready for pressing to produce the preformed element in the geometry required by the parts to be welded (the pipes 15 and 16 in the case of Figure 2).

In a second stage 30 the powder 27 is pressed and shaped. For this purpose the powder 27 is loaded into a mould 31 with a mould body 32 which can either assume ambient temperature or be heated by fluid or electrical resistance heaters 33 and comprises a seat 34 which receives the powder and in which an expulsion member 35 is movable to support the powder during pressing and to expel the finished element. A punch 36 moves within the seat 34 to press the powder, its configuration being such as to form the element 1 with the required shape (this being cylindrical with a through hole in the present case).

Said punch and the member 35 are driven in the direction of the arrows G and F in Figure 1 by any known drive means, not shown. The moulding can be carried out with a single or multiple mould under the following conditions:
1) at ambient temperature using a pressure of 0.7-2 ton/cm². or
2) with the mould heated to 35°-120°C using a pressure of less than 0.7 ton/cm².

When moulding is complete the expulsion member 35 expels the preformed element 1 from the mould body 32.

Because of the possible presence of lubricant in the organic binder the moulding rate is high; this presence also means that a consistent, well compacted moulding is obtained.

After the second stage 30 the element 1 can be used in braze-welding (stage 40 of Figure 1). In special cases the moulding or element 1 can be sintered at a temperature of 300-800°C in a controlled-atmosphere furnace.

An intermediate stage (indicated by 50 in Figure 1) between the stages 30 and 40 or after sintering is also possible, in which the element 1 is impregnated with a wax and/or silicone-based liquid to make the element impermeable, this being achieved for example by applying such wax and/or silicone to the element 1 or placing the element in a liquid wax and/or silicone bath. The stage 50 can also comprise heating to below 260°C.

According to a modification of the invention the organic binder can be dispensed with and only the lubricant (stearate and/or paraffin) be used, mixed in powder form with the rest of the material, with compaction of the flux and braze-welding powders. According to a further embodiment the preformed element is formed with both the binder and lubricant, the binder then being eliminated by heating in a controlled-atmosphere furnace.

The preformed element 1 obtained by the described method can have any geometry and can be used in any flame, induction, resistance or furnace welding by which the weld material (brazing alloy) is melted to join ferrous or non-ferrous metal parts (joining of pipes etc.) together.

## Claims

1. A method for forming preformed elements for welding metal components and parts, particularly by braze-welding, characterised by comprising a succession of stages (20, 30, 40) in which a known flux powder (10) is associated with a usual brazing alloy powder (11), the result obtained being finely pulverized and moulded to form the required preformed element (1).

2. A method as claimed in claim 1, characterised in that the flux powder (10) and brazing powder (11) are associated with granules of binder material.

3. A method as claimed in claim 1, characterised in that the flux powder has a particle size of between 100 and 400 mesh.

4. A method as claimed in claim 2, characterised in that the flux contains mixtures of sodium and/or potassium salts of boron and fluorine,

5. A method as claimed in claim 1, characterised in that the brazing alloy powder has a particle size of between 100 and 400 mesh.

6. A method as claimed in claim 4, characterised in that the brazing alloy has a melting point exceeding 420°C and is preferably a copper alloy.

7. A method as claimed in claim 2, characterised in that the binder material is a plastic organic material, preferably polyethylene or polypropylene.

8. A method as claimed in claim 7, characterised in that lubricant is preferably associated with the organic material.

9. A method as claimed in claim 8, characterised in that the lubricant is paraffin in a quantity of 30-40% of the total mass of binder material.

10. A method as claimed in claim 8, characterised in that the lubricant is a stearic acid salt.

11. A method as claimed in claim 2, characterised in that the binder material is paraffin.

12. A method as claimed in claim 2, characterised in that the binder material is a stearic acid salt.

13. A method as claimed in claims 1 and 2, characterised in that the flux powder (10) is present in a quantity of 3-5%, the brazing alloy powder (11) is present in a quantity of 50-97%, and the binder material is present in a quantity of 1-10%.

14. A method as claimed in claim 1, characterised by comprising a first stage (20) in which a premixed mass of flux powder (10), brazing alloy powder (11) and binder material (12) is further mixed to obtain a substantially homogeneous agglomerate, said mixing taking place while preferably maintaining the agglomerate at a temperature of 200-290°C and in any event less than 300°C, the particle size of said agglomerate then being reduced to 100-400 mesh.

15. A method as claimed in claims 1 and 14, characterised by comprising a second stage (30) in which the agglomerate (23) reduced to fine powder (27) is subjected to pressure and moulding, said operations being conducted by feeding said powder (27) into a mould (31) in which two movable members (35, 36) cooperate mutually to form the preformed element (1), the moulding pressure being 0.7-2 ton/cm².

16. A method as claimed in claim 15, characterised in that during the pressing and moulding, the powder (27) is subjected to heating by heating the mould (31) to a temperature maintained between 35°C and 120°C, the moulding pressure being less than 0.7 ton/cm².

17. A method as claimed in claim 15, characterised in that after being pressed and moulded, the powder (27) is subjected to pressure and then to sintering at a temperature of between 300°C and 800°C in a controlled-atmosphere furnace.

18. A method as claimed in claim 1, characterised by comprising a further stage (50) in which the preformed element (1) is made impermeable.

19. A method as claimed in claim 18, characterised in that the preformed element (1) is made impermeable by means of wax and/or silicone-based liquids.

20. A method as claimed in claim 18, characterised in that the preformed element (1) is subjected to a temperature of less than 260°C.

21. A method as claimed in claims 1 and 2, characterised in that the preformed element comprising flux powder (10), brazing alloy powder (11) and binder powder (12) is heated in a controlled atmosphere after pressing and moulding, to eliminate the binder (12).

22. A preformed element obtained by the method claimed in claim 1, characterised by being in the form of a body (2) homogeneously comprising flux powder (10) and a usual brazing alloy powder (11), said body (2) having a well defined and stable shape.

23. A preformed element as claimed in claim 22, characterised in that the flux powder (10) and alloy powder (11) are homogeneously dispersed within a binder material (12).

24. A preformed element as claimed in claim 23, characterised in that the binder material is organic.

25. A preformed element as claimed in claim 21, characterised by being of discoidal cylindrical shape.

26. A preformed element as claimed in claim 21, characterised by being of annular shape.

27. A preformed element as claimed in claim 21, characterised by being of washer shape.

28. A preformed element as claimed in claim 21, characterised by having a shape depending on the parts to be joined together by welding.
